# EUROPEAN PATENT APPLICATION

(11) **EP 4 645 180 A1**
(43) Date of publication of application: **05.11.2025**
(21) Application number: 25165298.8
(22) Date of filing: 21.03.2025
(51) Int. Cl.: G06Q 10/04, G06Q 50/04, G06Q 10/0635, G06N 3/045, G06N 3/08, G05B 19/418, G06V 20/52, G08B 31/00

(54) **METHOD AND APPARATUS FOR SAFETY DETECTION, AND STORAGE MEDIUM**

(30) Priority: 29.04.2024 CN 202410525240
(71) Applicant: Zhejiang Hengyi Petrochemical Co., Ltd., Zhejiang 311200 (CN); Shaoxing Shengong Packaging Co., Ltd., Shaoxing City, Zhejiang 311200 (CN)
(72) Inventor: WANG, Peng, Hangzhou, 311200 (CN); QIU, Yibo, Hangzhou, 311200 (CN); HE, Bin, Hangzhou, 311200 (CN); PENG, Xiantao, Hangzhou, 311200 (CN); SHENG, Jianjun, Hangzhou, 311200 (CN); ZHANG, Junwei, Hangzhou, 311200 (CN); LI, Dake, Hangzhou, 311200 (CN)
(74) Representative: Bittner, Bernhard

(57) **Abstract**

A method and apparatus for safety detection, and a storage medium are provided, relating to the field of computer technologies. The method includes: obtaining (S101) an actual environmental parameter of each of multiple first detection areas in a first time period; obtaining (S102) a first environmental parameter prediction result of each first detection area in a second time period based on the actual environmental parameter; obtaining (S103) multiple second detection areas based on an area position of each first detection area in the production workshop; obtaining (S104) a second environmental parameter prediction result of each second detection area in the second time period based on the first environmental parameter prediction result; and generating (S105) safety pre-warning information corresponding to a risk area when determining that the risk area is present in the multiple second detection areas based on the second environmental parameter prediction result.

## Description

### FIELD

The present disclosure relates to the field of computer technologies, and in particular, to a method and apparatus for safety detection, an electronic device, and a storage medium.

### BACKGROUND

The spinning process, as the most critical link in the textile industry, involves complex procedures and specialized environments, which often lead to numerous safety hazards. These hazards not only threaten production safety but also pose significant constraints on the healthy, stable, and sustainable development of the industry. Therefore, in the context of the rapid advancement of the textile industry, the realization of effective safety pre-warning systems for the spinning process has emerged as a pressing technical issue requiring immediate attention and resolution within the industry.

### SUMMARY

The invention is set out in the appended set of claims.

### BRIEF DESCRIPTION OF THE DRAWINGS

In the drawings, like reference characters designate like or similar parts or elements throughout the accompanying figures unless otherwise specified. The figures are not necessarily drawn to scale. It should be understood that these figures depict only some of the embodiments in accordance with the disclosure and are not to be considered limiting of the scope thereof.
FIG. 1 is a flowchart schematically illustrating a method for safety detection according to an embodiment of the present disclosure.
FIG. 2 is a schematic structural block diagram illustrating a time sequence model according to an embodiment of the present disclosure.
FIGS. 3A-3D are explanatory diagrams illustrating an acquisition process of a second detection area according to an embodiment of the disclosure.
FIG. 4 is a schematic scenario diagram of the method for safety detection according to the embodiment of the present disclosure.
FIG. 5 is a schematic structural block diagram illustrating an apparatus for safety detection according to an embodiment of the present disclosure.
FIG. 6 is a schematic structural block diagram illustrating an electronic device according to an embodiment of the present disclosure.

### DETAILED DESCRIPTION

The present disclosure will be further described in detail below with reference to the accompanying figures. In the figures, like reference numerals indicate functionally identical or similar elements. While various aspects of the embodiments are presented in the figures, the figures are not necessarily drawn to scale unless specifically indicated.

In addition, in order to better explain the present disclosure, numerous specific details will be given in the following specific implementations. Those having ordinary skill in the art should be understood that the present disclosure may be performed without certain specific details. In some examples, methods, means, elements and circuits well known to those having ordinary skill in the art are not described in detail, in order to highlight the subject matter of the present disclosure.

As mentioned above, the spinning process, as the most critical link in the textile industry, involves complex procedures and specialized environments, which often lead to numerous safety hazards, such as high temperature, harmful gas and volatile matter of chemical fiber oiling agent. These hazards not only threaten production safety but also pose significant constraints on the healthy, stable, and sustainable development of the industry. Therefore, in the context of the rapid advancement of the textile industry, the realization of effective safety pre-warning systems for the spinning process has emerged as a pressing technical issue requiring immediate attention and resolution within the industry.

In order to realize effective safety pre-warning for the spinning process, an embodiment of the disclosure provides a method for safety detection, which is applied to an electronic device. The electronic device may be embodied as a server or various forms of terminal devices, such as a computer (desktop or laptop), an internet of things device or other similar computing devices.

In addition, it should be noted that in the embodiments of the present disclosure, the primary task of the spinning process is to transform the most basic textile raw materials into yarn spindle products suitable for use in weaving machines through a series of treatments. The main type of these yarn spindle products can include at least one of: Partially Oriented Yarns (POY), Fully Drawn Yarns (FDY), Draw Textured Yarns (DTY) (also known as low-stretch yarns), or Polyester Staple Fibers (PSF). For example, the type of the yarn spindle products may specifically include Polyester Partially Oriented Yarns, Polyester Fully Drawn Yarns, Polyester Drawn Yarns, and Polyester Draw Textured Yarns.

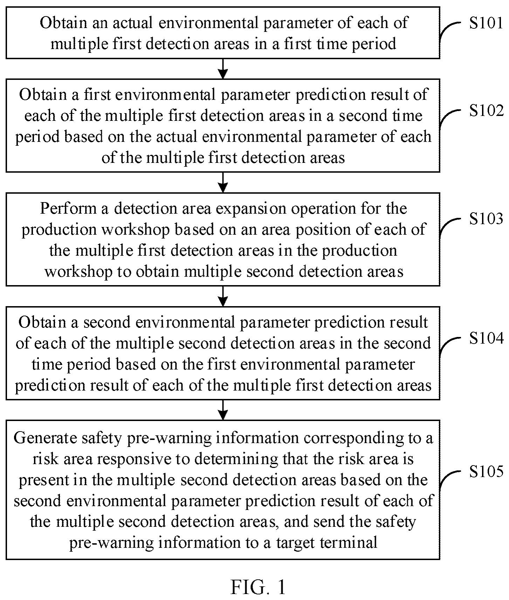

FIG. 1 is a flowchart schematically illustrating a method for safety detection according to an embodiment of the present disclosure. Hereinafter, the method for safety detection according to the embodiment of the present disclosure will be described with reference to FIG. 1. It should be noted that although a logical order is shown in the flowchart, in some cases, the steps shown or described may be performed in other orders.

Step S101, an actual environmental parameter of each of multiple first detection areas in a first time period is obtained.

The first time period may be a current time period having a time length of a first preset time length, and the first preset time length may be set according to an application requirement, which is not limited in the embodiment of the present disclosure; the multiple first detection areas are located in a production workshop. Here, the production workshop may be a utility workshop such as a boiler (or a heat medium furnace), or the production workshop may be a polymerization workshop, a spinning workshop, a winding workshop, a short-fiber pre-spun workshop, a short-fiber post-spun workshop, for example.

In an example, the production workshop is a utility workshop, and the multiple first detection areas may encompass adjacent areas to multiple boilers within the utility workshop. The adjacent area may characterize a designated point within a circumferential range centered on a target object (e.g., a first boiler, a second boiler, and a third boiler among the multiple boilers). Here, a radius length of the circumferential range may be determined based on application requirements, which is not limited in the embodiment of the present disclosure.

In another example, the production workshop is a polymerization workshop. In the polymerization workshop, Pure Terephthalic Acid (PTA) and Ethylene Glycol (EG) undergo an esterification reaction in a reaction environment at about 200°C, resulting in low-polymerization-degree Polyethylene Terephthalate (PET), and subsequently the low-polymerization-degree PET is polycondensed into a high polymer in a reaction environment at about 280°C. The high polymer can be conveyed to a spinning workshop to serve as raw material for direct melt-spinning; alternatively, the high polymer may be fed to a pelletizer to process the high polymer with the pelletizer to obtain polyester chips, which can serve as raw material for chip spinning. Based on this, in the embodiment of the present disclosure, the multiple first detection areas may include an adjacent area to a first reaction vessel for the esterification reaction, an adjacent area to a second reaction vessel for the polycondensation reaction, and an adjacent area to a heat medium pipe for conveying the high polymer in the polymerization workshop.

In yet another example, the production workshop is a spinning workshop. In the spinning workshop, the textile raw material conveyed to the spinning workshop can undergo raw material pressurization, melt cooling and static mixing treatments, the textile raw material subjected to the raw material pressurization, melt cooling and static mixing treatment is fed into a spinning box for spinning treatment, resulting in a yarn spindle product, and subsequently the yarn spindle product is subjected to cooling treatment, network application, oiling treatment, winding treatment and packaging treatment to obtain a packaged yarn spindle product. Based on this, in the embodiment of the present disclosure, the multiple first detection areas may include an adjacent area to the heat medium pipe for conveying the high polymer and adjacent areas to multiple spinning boxes in the spinning workshop.

In the embodiment of the disclosure, the actual environmental parameter of each of the multiple first detection areas in the first time period can be collected by robot patrols or by an environmental parameter sensor arranged in advance in each of the multiple first detection areas. Further, in the embodiment of the disclosure, when the production workshop is a utility workshop, the actual environmental parameter may include at least one of temperature and concentration of harmful gas; when the production workshop is a spinning workshop, the actual environmental parameter may include at least one of temperature, noise intensity, and concentration of chemical fiber oiling agent volatile. Here, the concentration of harmful gas is used to represent the concentration of harmful gas such as sulfur dioxide, nitrogen oxide, ammonia escape, or smoke particulate matters; the concentration of chemical fiber oilingvolatile is used to represent the concentration of volatile substance from chemical fiber oil.

Step S102, a first environmental parameter prediction result of each of the multiple first detection areas in a second time period is obtained based on the actual environmental parameter of each of the multiple first detection areas.

Here, the second time period is a future time period of the first time period. Specifically, the second time period may be a future time period of the first time period having a time length of a second preset time length. Here, the second preset time length may be equal to the first preset time length or may be different from the first preset time length, which may be specifically set according to an application requirement and which is not limited in the embodiment of the present disclosure.

In addition, in the embodiment of the present disclosure, by means of a preset prediction model, the first environmental parameter prediction result of each of the multiple first detection areas in the second time period is obtained based on the actual environmental parameter of each of the multiple first detection areas. The first environmental parameter prediction result and the actual environmental parameter have the same data representation meaning. For example, if the actual environmental parameter includes the temperature and the concentration of harmful gas, the first environmental parameter prediction result also includes the temperature and the concentration of harmful gas; for another example, if the actual environmental parameter includes temperature, noise intensity and concentration of chemical fiber oiling agent volatile, the first environmental parameter prediction result also includes the temperature, the noise intensity, and the concentration of chemical fiber oiling agent volatile.

Step S103, a detection area expansion operation is performed for the production workshop based on an area position of each of the multiple first detection areas in the production workshop to obtain multiple second detection areas.

The multiple second detection areas may include the multiple first detection areas and M risk diffusion areas related to the multiple first detection areas, or include the multiple first detection areas and at least one combined risk diffusion area obtained based on the M risk diffusion areas. Here, M ≥ 2 and M is an integer.

Step S104, a second environmental parameter prediction result of each of the multiple second detection areas in the second time period is obtained based on the first environmental parameter prediction result of each of the multiple first detection areas.

Here, the second environmental parameter prediction result and the first environmental parameter prediction result have the same data representation meaning. For example, if the first environmental parameter prediction result includes temperature and concentration of harmful gas, the second environmental parameter prediction result also includes the temperature and the concentration of harmful gas; for another example, if the first environmental parameter prediction result includes temperature, noise intensity and concentration of chemical fiber oiling agent volatile, and the second environmental parameter prediction result also includes the temperature, the noise intensity and the concentration of chemical fiber oiling agent volatile.

Step S105, safety pre-warning information corresponding to a risk area is generated responsive to determining that the risk area is present in the multiple second detection areas based on the second environmental parameter prediction result of each of the multiple second detection areas, and the safety pre-warning information is sent to a target terminal.

Here, the safety pre-warning information may be voice information, image-text information, or audio-video information generated by combining the voice information and the image-text information, which is not limited in the embodiment of the disclosure; and the target terminal is used for broadcasting the safety pre-warning information.

The safety detection method according to the embodiment of the disclosure can obtain the actual environmental parameter of each of the multiple first detection areas in the first time period, and can obtain the first environmental parameter prediction result of each of the multiple first detection areas in the second time period based on the actual environmental parameter of each of the multiple first detection areas. After obtaining the first environmental parameter prediction result of each of the multiple first detection areas in the second time period, the presence of a risk area in the production workshop is not judged based directly on the first environmental parameter prediction result, but multiple second detection areas are obtained by performing a detection area expansion operation on the production workshop based on the area position of each of the multiple first detection areas in the production workshop, then a second environmental parameter prediction result of each of the multiple second detection areas in the second time period is obtained based on the first environmental parameter prediction result of each of the multiple first detection areas, and then the presence of the risk area in the multiple second detection areas is judged based on the second environmental parameter prediction result of each of the multiple second detection areas. Since the final determination of the risk area is made using the multiple second detection areas as a candidate data set and the multiple second detection areas are obtained by performing the detection area expansion operation on the production workshop based on the area position of each of the multiple first detection areas in the production workshop, the candidate data set can be ensured to have high area coverage rate on the production workshop. Thus, when the risk area is present in the production workshop, this approach can accurately detect the risk area and generate corresponding safety pre-warning information, enabling effective safety pre-warning for the spinning process.

In addition, in the embodiment of the present disclosure, the preset prediction model may be a trained time sequence model. Based on this, in some optional embodiments, Step S102 may include the following steps.

Step S102-1, a first input sequence is constructed based on the actual environmental parameter of a first area to be processed by using each of the multiple first detection areas as the first area to be processed.

In an example, the first input sequence may be constructed by:
(1) analyzing the actual environmental parameter of the first area to be processed to obtain multiple actual environment sub-parameters.
   For example, when the production workshop is a utility workshop, the multiple actual environmental sub-parameters obtained by analyzing the actual environmental parameter of the first area to be processed can include temperature and concentration of harmful gas; for another example, when the production workshop is a spinning workshop, the multiple actual environmental sub-parameters obtained by analyzing the actual environmental parameter of the first area to be processed can include temperature, noise intensity, and concentration of chemical fiber oiling agent volatile.
(2) using each of the multiple actual environment sub-parameters as a first parameter sequence, and adding parameter attribute information and production task information to the first parameter sequence to obtain the first input sequence corresponding to the first parameter sequence.

When the production workshop is a utility workshop, the parameter attribute information is used to represent whether the actual environment sub-parameter represented by the first parameter sequence is the temperature or the concentration of harmful gas, and the production task information can include fuel components used by a boiler in the utility workshop and high-temperature steam temperature to be created, for example; when the production workshop is a spinning workshop, the parameter attribute information is used to represent whether the first parameter sequence is the temperature, the noise intensity or the concentration of chemical fiber oiling agent volatile, and the production task information can include a product type and a product specification of a yarn spindle product to be produced in the production workshop, for example.

In an example, the first input sequence may be represented as (A, X11, X12 ...... Xln, B1, B2 ......), wherein A is parameter attribute information; (X11, X12 ...... X1n) is a first parameter sequence, and X11 is an actual environmental sub-parameter value of the first area to be processed at a time T11 in the first time period; X12 is the actual environmental sub-parameter value of the first area to be processed at time T12 in the first time period; X1n is the actual environmental sub-parameter value of the first area to be processed at time T1n in the first time period; B1 and B2 are production task information of the production workshop, where n ≥ 20 and n is an integer n.

Step S102-2, a second input sequence is constructed based on the actual environmental parameter of the first area to be processed and a preset input sequence.

In an example, the second input sequence may be constructed by:
(1) analyzing the actual environmental parameter of the first area to be processed to obtain multiple actual environment sub-parameters.
   For example, when the production workshop is a utility workshop, the multiple actual environmental sub-parameters obtained by analyzing the actual environmental parameters of the first area to be processed can include the temperature and the concentration of harmful gas; for another example, when the production workshop is a spinning workshop, the multiple actual environmental sub-parameters obtained by analyzing the actual environmental parameters of the first area to be processed can include the temperature, the noise intensity, and the concentration of chemical fiber oiling agent volatile.
(2) using each of the multiple actual environment sub-parameters as a second parameter sequence, and intercepting at least part of tail sequence of the second parameter sequence to be used as a sequence to be added.

In an example, the second parameter sequence may be represented as (X11, X12 ...... X1n), wherein X11 is the actual environmental sub-parameter value of the first area to be processed at the time T11 in the first time period; X12 is the actual environmental sub-parameter value of the first area to be processed at time T12 in the first time period; X1n is the actual environmental sub-parameter value of the first area to be processed at time T1n in the first time period. At least part of the tail sequence intercepted from the second parameter sequence, i.e., the sequence to be added, can be represented as (X1n-9, X1n-8 ...... X1n), wherein X1n-9 is the actual environmental sub-parameter value of the first area to be processed at the time T1n-9 in the first time period; x1n-8 is the actual environmental sub-parameter value of the first area to be processed at the time T1n-8 in the first time period; x1n is the actual ambient sub-parameter value of the first area to be processed at time T1n in the first time period.

(2) adding the parameter attribute information and the production task information to the sequence to be added to obtain an intermediate input sequence corresponding to the second parameter sequence.

As described above, when the production workshop is a utility workshop, the parameter attribute information is used to represent whether the actual environment sub-parameter represented by the second parameter sequence is the temperature or the concentration of harmful gas, and the production task information can include fuel components used by a boiler in the utility workshop and high-temperature steam temperature to be created, for example; when the production workshop is a spinning workshop, the parameter attribute information is used to represent whether the second parameter sequence is the temperature, the noise intensity or the concentration of chemical fiber oiling agent volatile, and the production task information can include a product type and a product specification of a yarn spindle product to be produced in the production workshop, for example.

In an example, the intermediate input sequence may be represented as (A, X1n-9, X1n-8 ...... X1n, B1, B2 ... ...), wherein A is parameter attribute information; (X1n-9, X1n-8 ...... X1n) is a sequence to be added, and X1n-9 is the actual environment sub-parameter value of the first area to be processed at time T1n-9 in the first time period; X1n-8 is the actual environmental sub-parameter value of the first area to be processed at the time T1n-8 in the first time period; X1n is the actual ambient sub-parameter value of the first area to be processed at time T1n in the first time period; B1 and B2 are production task information of the production workshop.

(3) adding the preset input sequence to the intermediate input sequence to obtain a second input sequence corresponding to the second parameter sequence.

Each value in the preset input sequence may be set to be the same initial value, and a sequence length of the preset input sequence may be set according to an application requirement, which is not limited in the embodiment of the present disclosure.

In an example, the second input sequence may be represented as (A, X1n-9, X1n-8 ...... X1n, B1, B2 ...... C1, C2 ...... Cm), wherein (A, X1n-9, X1n-8 ... ... X1n, B1, B2 ... ...) is an intermediate input sequence corresponding to the second parameter sequence, and A is parameter attribute information; X1n-9 is the actual environmental sub-parameter value of the first area to be processed at the time T1n-9 in the first time period; X1n-8 is the actual environmental sub-parameter value of the first area to be processed at the time T1n-8 in the first time period; X1n is the actual environment sub-parameter value of the first area to be processed at the time T1n in the first time period, and B1 and B2 are production task information of the production workshop; (C1, C2 ...... Cm) is the preset input sequence, where m ≥ 20 and m is an integer.

Step S102-3, the first input sequence and the second input sequence are input into a trained time sequence model to obtain an integral output sequence of the time sequence model.

The trained time sequence model may be an Informer Model, or an Autoregressive Integrated Moving Average Model, for example.

In an example, the trained time sequence model may be obtained by:
obtaining a first actual environmental parameter of each of multiple target detection areas selected from the production workshop in a first training period; using each of the multiple target detection areas as a model training area, and constructing a first training input sequence based on an actual environmental parameter of the model training area; constructing a second training input sequence based on the first actual environmental parameter of the model training area and a preset training input sequence; inputting the first input training sequence and the second input training sequence into an initial time sequence model to obtain an integral training output sequence of the initial time sequence model; obtaining an environmental parameter prediction result of the model training area in the second training period based on the integral training output sequence; and adjusting a model parameter of the initial time sequence model based on the environmental parameter prediction result and a second actual environmental parameter of the model training area in the second training period.

In the above manner, the model parameter of the initial time sequence model is adjusted for multiple times until the initial time sequence model meets a convergence condition, and using the initial time sequence model as the trained time sequence model.

The above manner can be specifically understood by combining Steps S101 and S102 (including Steps S102-1, S102-2 and S102-3), and will not be described herein again.

Furthermore, it can be understood that in the embodiment of the present disclosure, when Step S102-3 is executed, the first input sequence and the second input sequence having the same parameter attribute information are input into the trained time sequence model, so as to obtain the integral output sequence of the time sequence model.

In an example, there are a first input sequence D1 and a first input sequence D2, and a second input sequence E1 and a second input sequence E2.

Here, the first input sequence D1 and the second input sequence E1 have the same parameter attribute information, and in particular, the parameter attribute information is used to represent an actual environmental sub-parameter in the first input sequence D1 and the second input sequence E1 as temperature; the first input sequence D2 and the second input sequence E2 have the same parameter attribute information, and in particular, the parameter attribute information is used to represent an actual environmental sub-parameter in the first input sequence D2 and the second input sequence E2 as concentration of harmful gas.

Then, when Step S102-3 is executed, the first input sequence D1 and the second input sequence E1 are input into the trained time sequence model to obtain an integral output sequence of the time sequence model, and the integral output sequence is related to a first predicted temperature value in the first environmental parameter prediction result of the first area to be processed in the second time period; when Step S102-3 is executed, the first input sequence D2 and the second input sequence E2 are input into the trained time sequence model to obtain an integral output sequence of the time sequence model, and the integral output sequence is related to a first predicted harmful-gas concentration value in the first environmental parameter prediction result of the first area to be processed in the second time period.

The above steps included in Step S102, in the embodiment of the present disclosure, can use each of the multiple first detection areas as a first area to be processed, construct a first input sequence based on the actual environmental parameter of the first area to be processed, construct a second input sequence based on the actual environmental parameter of the first area to be processed and a preset input sequence, and then input the first input sequence and the second input sequence into the trained time sequence model to obtain an integral output sequence of the time sequence model, so as to obtain a first environmental parameter prediction result of the first area to be processed in the second time period based on the integral output sequence. Since the construction of the first input sequence and the second input sequence depends on the actual environmental parameter of the first area to be processed and the actual environmental parameter of the first area to be processed is used for reflecting real-time environment of the production workshop, positive guidance can be provided for data processing of the time sequence model, thereby improving the accuracy of the first environmental parameter prediction result.

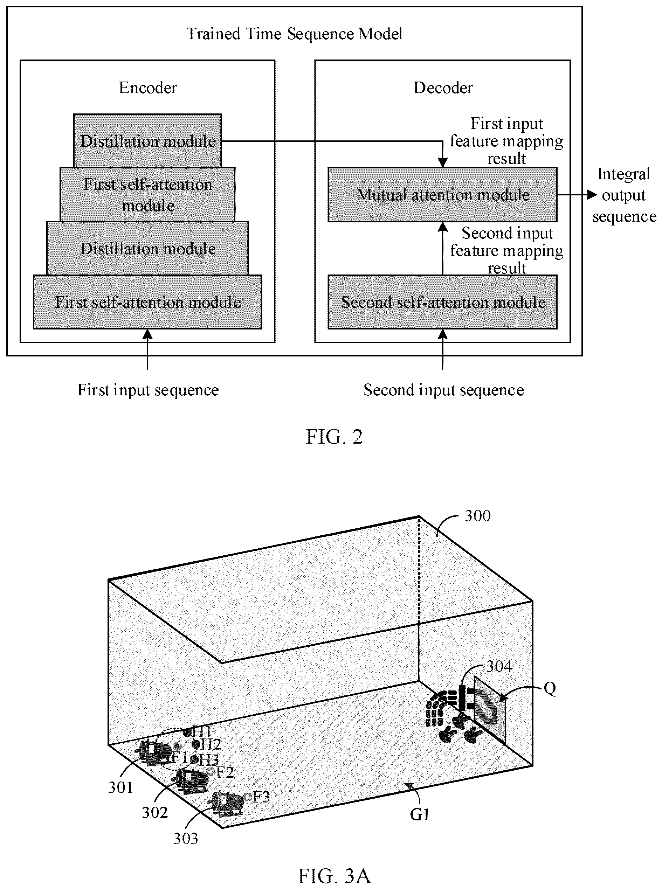

Referring to FIG. 2, in an example, the trained time sequence model includes an encoder and a decoder. Based on this, in this example, the integral output sequence of the time sequence model can be obtained by:
(1) inputting the first input sequence into the encoder, and processing the first input sequence by using a first self-attention module and a distillation module in the encoder to obtain a first input feature mapping result.

Herein the encoder may include multiple concatenated feature encoding structures, each of which may in turn include the first self-attention module and the distillation module in series.

In addition, in the embodiment of the disclosure, the first self-attention module is configured to implement self-attention calculation on an input sequence by using a ProbSparse sparse self-attention mechanism to obtain an intermediate sequence, input the intermediate sequence into a distillation module that belongs to the same feature encoding structure as the first self-attention module, distill the intermediate sequence through the distillation module to reduce complexity of an output sequence, and use the distilled intermediate sequence as the output sequence of the feature encoding structure.

It can be understood that, in the embodiment of the present disclosure, an output sequence of the last feature encoding structure in the multiple concatenated feature encoding structures is the first input feature mapping result.

(2) inputting the second input sequence into a second self-attention module in the encoder, and processing the second input sequence by using the second self-attention module to obtain a second input feature mapping result.

The second self-attention module is configured to implement self-attention calculation on a second input sequence by using the ProbSparse sparse self-attention mechanism and a mask mechanism to obtain the second input feature mapping result.

(3) inputting the first input feature mapping result and the second input feature mapping result into a mutual attention module in the encoder, and processing the first input feature mapping result and the second input feature mapping result by using the mutual attention module to obtain the integral output sequence of the time sequence model.

Step S102-4, the first environmental parameter prediction result of the first area to be processed in the second time period is obtained based on the integral output sequence.

In a specific example, a sequence portion corresponding to the preset input sequence may be determined from the integral output sequence to be the first environmental parameter prediction result of the first area to be processed in the second time period.

For example, when the integral output sequence is related to a first predicted temperature value in the first environmental parameter prediction result of the first area to be processed in the second time period, the first environmental parameter prediction result is the first predicted temperature value; for another example, when the integral output sequence is related to the first predicted harmful-gas concentration value in the first environmental parameter prediction result of the first area to be processed in the second time period, the first environmental parameter prediction result is the first predicted harmful-gas concentration value.

In the above example, the trained time sequence model has a simple model structure. Therefore, the first environmental parameter prediction result of the first area to be processed in the second time period can be quickly obtained by using the trained time sequence model, thereby improving the execution efficiency of the safety detection method.

Furthermore, as described above, the multiple second detection areas may include the multiple first detection areas and M risk diffusion areas related to the multiple first detection areas, or include the areas first detection areas and at least one risk diffusion merged area derived from the M risk diffusion areas. Based on this, in some optional implementations, Step S103 may include the following steps.

Step S103-1, by using each of the multiple first detection areas as the first area to be processed, at least one risk diffusion area related to the first area to be processed is determined from the production workshop to obtain M risk diffusion areas related to the multiple first detection areas.

In an example, the at least one risk diffusion area related to the first area to be processed may be determined by:
(1) obtaining a workshop structured model of the production workshop.

The workshop structure model can be a three-dimensional software model constructed by SketchUp, Revit, 3dsMax, Cedreo, or AutoCAD based on the workshop structure and the internal component of a production workshop. Here, the shop structure may include a workshop shape and a workshop size, for example; the internal component may include built-in equipment of the production workshop. Based on this, in this example, the workshop structure model may carry workshop structure information for representing the workshop structure of the production workshop, as well as internal component information for representing the internal component of the production workshop.

Here, the built-in equipment may include a production facility and an auxiliary facility, for example.

For example, when the production workshop is a utility workshop, the production facility may include a plurality of boilers; the auxiliary facility can include air exhaust equipment and refrigerating and heating equipment; for another example, when the production workshop is a polymerization workshop, the production facility may include a first reaction vessel for performing an esterification reaction, a second reaction vessel for performing a polycondensation reaction, and a heat medium pipe for conveying a high polymer; the auxiliary facility can include air exhaust equipment and refrigerating and heating equipment; for another example, when the production workshop is a spinning workshop, the production facility may include a heat medium pipe for conveying the high polymer and a plurality of spinning boxes; the auxiliary facility may include air exhaust equipment and refrigerating and heating equipment.

(2) based on the workshop structure information and the internal component information, determining a candidate diffusible area related to the first area to be processed from the production workshop.

Herein, the candidate diffusible area related to the first area to be treated may be all areas to which safety-affecting factors (e.g., heat, harmful gas, noise, chemical fiber oiling agent volatile, etc.,) can be diffused from the first area to be processed in the production workshop. Further, in this example, the candidate diffusible area related to the area to be processed may be all vacant areas within the production shop.

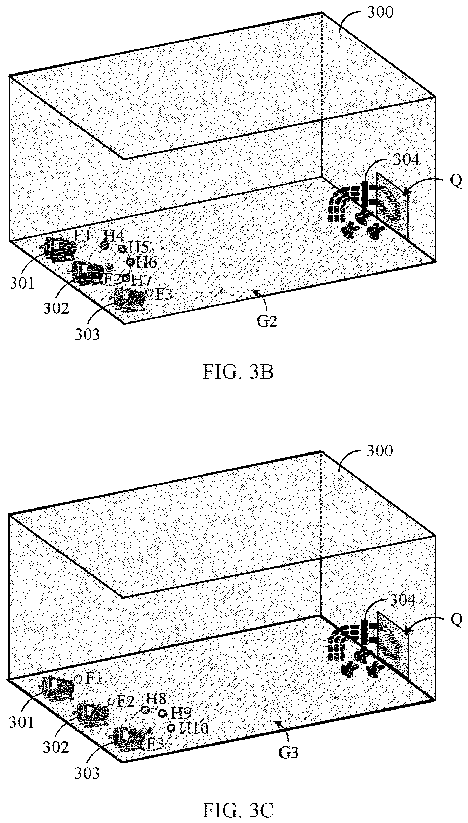

Referring to FIGS. 3A, 3B and 3C, the production workshop is a utility workshop 300, and the production facility includes a first boiler 301, a second boiler 302 and a third boiler 303.

In this case, the multiple first detection areas may include an adjacent area to a first boiler 301, an adjacent area to a second boiler 302, and an adjacent area to a third boiler 303. When the adjacent area of the first boiler 301 is taken as the first area to be processed F1, all areas to which the safety-affecting factor can be diffused from the first area to be processed F1 (specifically, all vacant areas in the production workshop 300) can be determined from the production workshop 300 as a candidate diffusible area G1 (for example, a shaded area shown in FIG. 3A) related to the first area to be processed F1, based on the workshop structure information and the internal component information; when the adjacent area of the second boiler 302 is taken as the first area to be processed F2, all areas to which the safety-affecting factor can be diffused from the first area to be processed F2 (specifically, all vacant areas in the production workshop 300) can be determined from the production workshop 300 as a candidate diffusible area G2 (for example, a shaded area shown in FIG. 3B) related to the first area to be processed F2, based on the workshop structure information and the internal component information; when the adjacent area of the third boiler 303 is taken as the first area to be processed F3, all areas to which the safety-affecting factor can be diffused from the first area to be processed F3 (specifically, all vacant areas in the production workshop 300) can be determined from the production workshop 300 as a candidate diffusible area G3 (for example, the shaded area shown in FIG. 3C) related to the first area to be processed F3, based on the workshop structure information and the internal component information.

(3) determining at least one risk diffusion area related to the first area to be processed from the candidate diffusible areas based on the internal component information and the first area to be processed.

Herein the at least one risk diffusion area related to the first area to be processed may be an area within the candidate diffusible areas to which the safety-affecting factor can be diffused from the first area to be processed in a fastest and highest-amount manner. Furthermore, generally speaking, at least one risk diffusion area related to the first area to be processed is at least affected by the air exhaust equipment provided in the production workshop.

Based on this, in a specific example, an area to which the safety-affecting factor can be diffused from the first area to be processed in the fastest and highest-amount manner can be determined from the candidate diffusible areas as the at least one risk diffusion area related to the first area to be processed, based on the internal component information and the first area to be processed.

Specifically, a shape, size and arrangement position of the air exhaust equipment in the production workshop can be obtained based on the internal component information; an air exhaust area in a production workshop can be determined based on the shape, size and arrangement position of air exhaust equipment; based on the air exhaust area and the first area to be processed, the area to which the safety-affecting factor can be diffused from the first area to be processed in the fastest and highest-amount manner can be determined from the candidate diffusible areas as the at least one risk diffusion area related to the first area to be processed.

More specifically, a reference circumference with the first area to be processed as a center point may be drawn within the candidate diffusible areas, and multiple reference points may be calibrated on the reference circumference according to a preset circumferential distance; based on the internal component information, the shape, size and arrangement position of the air exhaust equipment in the production workshop are obtained, and based on the shape, size and arrangement position of the air exhaust equipment, the air exhaust area in the production workshop is determined; and a location between the air exhaust area and the first area to be processed is selected from the multiple reference points as at least one risk diffusion area related to the first area to be processed. A radius length of the reference circumference and a distance length of the preset circumferential distance can be set according to application requirements, which will not be limited in the embodiment of the disclosure.

Referring to FIG. 3A, when an adjacent area to the first boiler 301 is taken as the first area to be processed F1, there is a candidate diffusible area G1 related to the first area to be processed F1. At this time, a reference circumference with the first area to be processed F1 as a central point may be drawn within the candidate diffusible area G1, and multiple reference points (not fully shown in FIG. 3A) may be calibrated according to a preset circumferential distance on the reference circumference; based on the internal component information, a shape and size and arrangement position of the air exhaust equipment 304 in the production workshop are obtained, and based on the shape, size and the arrangement position of the air exhaust equipment 304, an air exhaust area Q in the production workshop is determined; a location of an area between the air exhaust area Q and the first area to be processed F1 is selected from the multiple reference points as at least one risk diffusion area related to the first area to be processed G1, that is, a risk diffusion area H1, a risk diffusion area H2, and a risk diffusion area H3.

Referring to FIG. 3B, when an adjacent area to the second boiler 302 is taken as the first area to be processed F2, there is a candidate diffusible area G2 related to the first area to be processed F2. At this time, a reference circumference with the first area to be processed F2 as a central point may be drawn within the candidate diffusible area G2, and multiple reference points (not fully shown in FIG. 3B) may be calibrated according to a preset circumferential distance on the reference circumference; based on the internal component information, a shape and size and arrangement position of the air exhaust equipment 304 in the production workshop are obtained, and based on the shape, size and the arrangement position of the air exhaust equipment 304, an air exhaust area Q in the production workshop is determined; a location of an area between the air exhaust area Q and the first area to be processed F2 is selected from the multiple reference points as at least one risk diffusion area related to the first area to be processed G2, that is, a risk diffusion area H4, a risk diffusion area H5, a risk diffusion area H6 and a risk diffusion area H7.

Referring to FIG. 3C, when an adjacent area to the third boiler 303 is taken as the first area to be processed F3, there is a candidate diffusible area G3 related to the first area to be processed F3. At this time, a reference circumference with the first area to be processed F3 as a central point may be drawn within the candidate diffusible area G3, and multiple reference points (not fully shown in FIG. 3C) may be calibrated according to a preset circumferential distance on the reference circumference; based on the internal component information, a shape and size and arrangement position of the air exhaust equipment 304 in the production workshop are obtained, and based on the shape, size and the arrangement position of the air exhaust equipment 304, an air exhaust area Q in the production workshop is determined; a location of an area between the air exhaust area Q and the first area to be processed F3 is selected from the multiple reference points as at least one risk diffusion area related to the first area to be processed G3, that is, a risk diffusion area H8, a risk diffusion area H9, and a risk diffusion area H10.

Step S103-2, multiple second detection areas are obtained based on the multiple first detection areas and the M risk diffusion areas.

In an example, the multiple first detection areas and the M risk diffusion areas may be collectively used as the multiple second detection areas, or the multiple first detection areas and at least one risk diffusion merged area obtained based on the M risk diffusion areas may be collectively used as the multiple second detection areas.

Through the above steps included in Step S103, in the embodiment of the present disclosure, it is possible to determine at least one risk diffusion area related to the first area to be processed from the production workshop by using each of the multiple first detection areas as the first area to be processed, to obtain M risk diffusion areas related to the multiple first detection areas, and to obtain the multiple second detection areas based on the multiple first detection areas and the M risk diffusion areas. In this way, the detection area extension for the production workshop can be achieved to ensure that the candidate data set (the multiple second detection areas) has a high area coverage rate for the production workshop, while ensuring the reliability of the candidate data set.

Further, when the multiple first detection areas and the at least one risk diffusion merged area obtained based on the M risk diffusion areas are collectively used as multiple second detection areas, the multiple second detection areas may be obtained by:
(1) obtaining at least one mergeable area group based on the M risk diffusion areas.

Herein, each of the at least one mergeable area group includes N mergeable areas in the M risk diffusion areas, where 2≤N≤M, and M and N are an integer.

In an example, a first spacing distance between any two mergeable areas in each of the at least one mergeable area group is less than or equal to a preset distance threshold. The preset distance threshold may be set according to an application requirement, which is not limited in the embodiment of the present disclosure.

(2) performing area merging on each of the at least one mergeable area group, respectively, to obtain at least one risk diffusion merged area.

Herein, the at least one risk diffusion merged area corresponds one-to-one to the at least one mergeable area group.

In an example, performing the area merging on the mergeable area group may include merging N mergeable areas included in the mergeable area group, resulting in one risk diffusion merged area.

(3) collectively using the multiple first detection areas and the at least one risk diffusion merged area as the multiple second detection areas.

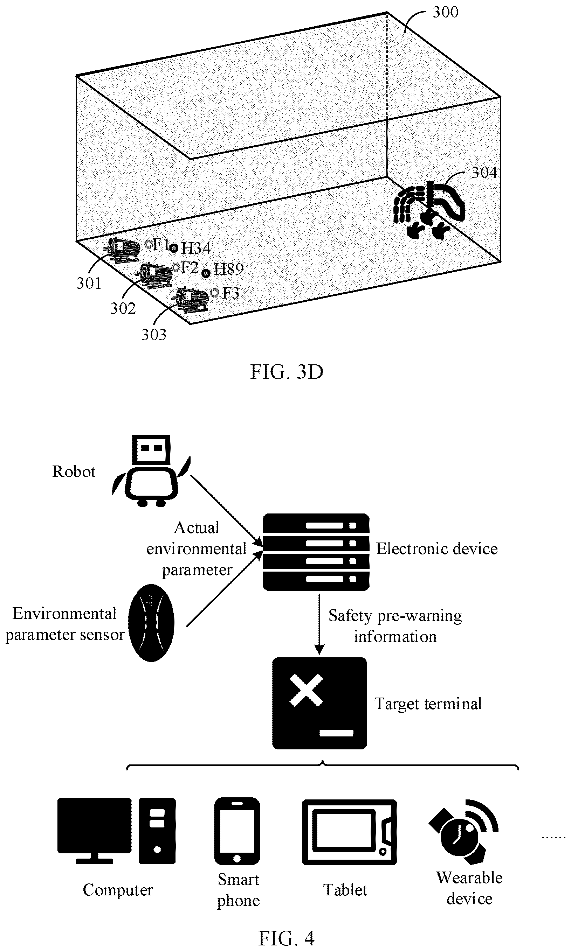

Referring to FIGS. 3A, 3B and 3C, there are 10 risk diffusion areas related to the multiple first detection areas, in which the 10 risk diffusion areas are a risk diffusion area H1, a risk diffusion area H2, a risk diffusion area H3, a risk diffusion area H4, a risk diffusion area H5, a risk diffusion area H6, a risk diffusion area H7, a risk diffusion area H8, a risk diffusion area H9 and a risk diffusion area H10. Herein, a first spacing distance between the risk diffusion area H3 and the risk diffusion area H4 is less than or equal to a preset distance threshold, and thus, the risk diffusion area H3 and the risk diffusion area H4 belong to one mergeable area group; and a first spacing distance between the risk diffusion area H7 and the risk diffusion area H8 is less than or equal to a preset distance threshold, and thus, the risk diffusion area H9 and the risk diffusion area H8 belong to one mergeable area group. With reference to FIG. 3D, the risk diffusion area H3 and the risk diffusion area H4 are merged to obtain a risk diffusion merged area H34, and the risk diffusion area H7 and the risk diffusion area H8 are merged to obtain a risk diffusion merged area H78.

Finally, the multiple first detection areas (the first adjacent area to the first boiler 301, the adjacent area to the second boiler 302, and the adjacent area to the third boiler 303), the risk diffusion merged area H34 and the risk diffusion merged area H78 may be collectively used as the multiple second detection areas.

Through the above manner, at least one mergeable area group is obtained based on the M risk diffusion areas, and then the multiple first detection areas and the at least one risk diffusion merged area are collectively used as the multiple second detection areas. As such, it is possible to avoid the redundancy of the second detection area, thereby reducing the data processing amount of the safety detection method and further improving the execution efficiency of the safety detection method.

In some optional implementations, Step S104 may include the following steps.

Step S104-1, by using each risk diffusion merged area in the multiple second detection areas as a second area to be processed, at least one reference area related to the second area to be processed is determined from the multiple first detection areas.

Referring to FIG. 3D, when the risk diffusion merged area H34 is used as the second area to be processed, the at least one reference area related to the second area to be processed and determined from the multiple first detection areas includes the adjacent area to the first boiler 301 (i.e., the first area to be processed F1) and the adjacent area to the second boiler 302 (i.e., the first area to be processed F2); when the risk diffusion merged area H89 is used as the second area to be processed, the at least one reference area related to the second area to be processed and determined from the multiple first detection areas includes the adjacent area to the second boiler 302 (i.e., the first area to be processed F2) and the adjacent area to the third boiler 303 (i.e., the first area to be processed F3).

Step S104-2, the second environmental parameter prediction result of the second area to be processed in the second time period is obtained based on the first environmental parameter prediction result of the at least one reference area.

In an example, the second environmental parameter prediction result of the second area to be processed in the second time period may be obtained by:
(1) using each of the at least one reference area as a target reference area to obtain a second spacing distance between the target reference area and the second area to be processed.
(2) setting a parameter weight correlated with the second spacing distance.

In a specific example, a parameter weight negatively correlated with the second spacing distance may be set according to a parameter setting mechanism. The negative correlation with the second spacing distance means that the larger the second spacing distance, the smaller the parameter weight, and vice versa, the smaller the second spacing distance, the larger the parameter weight.

In another specific example, a first weight negatively correlated with the second spacing distance may be set according to a first parameter setting mechanism, a second weight negatively correlated with a reference angle may be set according to a second parameter setting mechanism, and a product of the first weight and the second weight may be used as the parameter weight correlated with the second spacing distance. The negative correlation with the second spacing distance means that the larger the second spacing distance, the smaller the first weight, and vice versa, the smaller the second spacing distance, the larger the first weight; the negative correlation with the reference angle means that the larger the reference angle, the smaller the second weight, and vice versa, the smaller the reference angle, the larger the second weight. Here, the reference angle may be an angle between a first reference line and a second reference line. The first reference line may be a connection line between a center point of the target reference area and a center point of the air exhaust area, and the second reference line may be a connection line between the center point of the target reference area and a center point of the second area to be processed.

(3) obtaining an additive environmental parameter prediction result of the second area to be processed in the second time period based on the first environmental parameter prediction result and the weight parameter of the target reference area.

In a specific example, the first environmental parameter prediction result of the target reference area may be split to obtain at least one first environmental parameter prediction value, each of the at least one first environmental prediction value is multiplied by the weight parameter to obtain at least one first additive environmental parameter prediction value corresponding one-to-one to the at least one first environmental prediction value, and then the at least one first additive environmental parameter prediction value is collectively used as the additive environmental parameter prediction result of the second are to be processed in the second time period.

(4) obtaining the second environmental parameter prediction result of the second area to be processed in the second time period based on at least one additive environmental parameter prediction result corresponding one-to-one to the at least one reference area.

In a specific example, each of the at least one additive environmental parameter prediction result may be split to obtain at least one first additive environmental parameter prediction value, all the first additive environmental parameter prediction values with the same parameter attribute are added, respectively, to obtain at least one second environmental parameter prediction value corresponding one-to-one to the at least one first additive environmental parameter prediction value, and then the at least one second environmental parameter prediction value corresponding one-to-one to the at least one first additive environmental parameter prediction value is collectively used as the second environmental parameter prediction result of the second area to be processed in the second time period.

Referring to FIG. 3D, when the risk diffusion merged area H34 is used as the second area to be processed, the at least one reference area related to the second area to be processed includes an adjacent area to the first boiler 301 (i.e., the first area to be processed F1) and an adjacent area to the second boiler 302 (i.e., the first area to be processed F2). Here, the adjacent area to the first boiler 301 (i.e., the first area to be processed F1) is a target reference area I1, and the adjacent area to the second boiler 302 (i.e., the first area to be process F2) is a target reference area I2.

Assuming that the production workshop is a utility workshop, for the target reference area I1, the first environmental parameter prediction result includes a first temperature prediction value x1 and a first harmful-gas concentration prediction value y1, the second spacing distance between the target reference area I1 and the second area to be processed is h1, and the parameter weight related to the second spacing distance h1 is z1. Then, based on the first environmental parameter prediction result (the first temperature prediction value x1 and the first harmful-gas concentration prediction value y1) and the weight parameter z1 of the target reference area I1, the obtained first additive environmental parameter prediction result of the second area to be processed in the second time period may include:
a first additive temperature prediction value: x1 × z1; and
a first additive harmful gas concentration value: y1 × z1.

Similarly, for the target reference area I2, the first environmental parameter prediction result includes a first temperature prediction value x2 and a first harmful-gas concentration prediction value y2, the second spacing distance between the target reference area I2 and the second area to be processed is h2, and the parameter weight related to the second spacing distance h2 is z2. Then, based on the first environmental parameter prediction result (the first temperature prediction value x2 and the first harmful-gas concentration prediction value y2) and the weight parameter z2 of the target reference area I2, the obtained second additive environmental parameter prediction result of the second area to be processed in the second time period may include:
a second additive temperature prediction value: x2 × z2; and
a second additive harmful gas concentration value: y2 × z2.

Based on the first additive environmental parameter prediction result and the second additive environmental parameter prediction result, the obtained second environmental parameter prediction result of the second area to be processed in the second time period may include:
a second temperature prediction value: x1 × z1 + x2 × z2; and
a second harmful-gas concentration prediction value: y1 × z1 + y2 × z2.

Through the above steps included in step S104, in the embodiment of the present disclosure, it is possible to use each risk diffusion merged area in the multiple second detection areas as the second area to be processed, to determine at least one reference area related to the second area to be processed from the multiple first detection areas, and to obtain the second environmental parameter prediction result of the second area to be processed in the second time period based on the first environmental parameter prediction result of the at least one reference area. In this way, the accuracy of the second environmental parameter prediction result can be ensured.

In addition, it should be noted that, in the embodiment of the present disclosure, for each first detection area in the multiple second detection areas, the first environmental parameter prediction result of the first detection area may be directly used as the second environmental parameter prediction result of the second detection area after the first detection area is used as the second detection area, which will not be described herein again.

Further, in the embodiment of the present disclosure, the presence of a risk area in the multiple second detection areas may be determined by:
(1) by using each of the multiple second detection areas as a third area to be processed, obtaining at least one risk assessment parameter based on the second environmental parameter prediction result of the third area to be processed.
   In an example, when the production workshop is a utility workshop, the obtained at least one risk assessment parameter based on the second environmental parameter prediction result of the third area to be processed may include temperature and concentration of harmful gas; when the production workshop is a spinning workshop, the obtained at least one risk assessment parameter based on the second environmental parameter prediction result of the third area to be processed may include temperature, noise intensity and concentration of chemical fiber oilingagent volatile.
(2) obtaining a risk parameter threshold corresponding to each of the at least one risk assessment parameter.
(3) determining that the risk area is present in the multiple second detection areas responsive to determining the third area to be processed to be the risk area based on the at least one risk assessment parameter and the risk parameter threshold corresponding to each of the at least one risk assessment parameter.

In an example, each of the at least one risk assessment parameter may be used as a target assessment parameter, a target risk parameter threshold corresponding to the target assessment parameter is obtained, and in the case that a parameter value of the target assessment parameter is greater than or equal to the target risk parameter threshold, the third area to be processed is determined as a risk area, so as to determine the presence of the risk area in the multiple second detection areas.

Through the above manner, in the embodiment of the present disclosure, after each of the multiple second detection areas is used as the third area to be processed and at least one risk assessment parameter is obtained based on the second environmental parameter prediction result of the third area to be processed, a corresponding risk parameter threshold is set for each of the at least one risk assessment parameter, so as to perform classification judgment. Thus, when a risk area is present in the production workshop, the risk area can be detected more accurately.

In some optional implementations, the Step S105 of generating safety pre-warning information corresponding to the risk area may include the following steps.

Step S105-1, an initial workshop image is constructed based on an internal structure of the production workshop.

Herein, the initial workshop image may be a two-dimensional plane image or a three-dimensional stereo model, which is not limited in the embodiment of the present disclosure.

Step S105-2, a target point corresponding to the risk area is determined in the initial workshop image.

Step S105-3, special marking is performed on the target point in the initial workshop image to obtain a target workshop image, and the safety pre-warning information is obtained based on the target workshop image.

Herein, the special marking may be indicated by a striking color or indicated by a dangerous icon, which is not limited in the embodiment of the present disclosure.

After the target workshop image is obtained, the target workshop image can be used as the safety pre-warning information, or the safety pre-warning information can also be obtained by combining voice information and the target workshop image.

Through the steps included in Step S105, in the embodiment of the present disclosure, the initial workshop image may be constructed based on the internal structure of the production workshop, the target point corresponding to the risk area is determined in the initial workshop image, then the target point is specially marked in the initial workshop image to obtain the target workshop image, and the target workshop image is used as the safety pre-warning information, thereby improving the prompt effect of the safety pre-warning information.

Further, please refer to FIG. 4, which illustrates a schematic scenario diagram of the method for safety detection according to the embodiment of the present disclosure.

As described above, the method for safety detection according to the embodiment of the present disclosure is applied to an electronic device. The electronic device may represent a server, or various forms of terminal equipment, such as a computer (desktop or laptop), an internet of things device, or other similar computing devices.

The electronic device may be configured to:
obtain an actual environmental parameter of each of multiple first detection areas in a first time period, wherein the multiple first detection areas are located in a production workshop;
obtain a first environmental parameter prediction result of each of the multiple first detection areas in a second time period based on the actual environmental parameter of each of the multiple first detection areas, wherein the second time period is a future time period of the first time period;
perform a detection area expansion operation for the production workshop based on an area position of each of the multiple first detection areas in the production workshop to obtain multiple second detection areas;
obtain a second environmental parameter prediction result of each of the multiple second detection areas in the second time period based on the first environmental parameter prediction result of each of the multiple first detection areas; and
generate safety pre-warning information corresponding to a risk area responsive to determining that the risk area is present in the multiple second detection areas based on the second environmental parameter prediction result of each of the multiple second detection areas, and send the safety pre-warning information to a target terminal,
wherein the target terminal may be a computer (desktop or laptop), a smart phone, a tablet, a wearable device, or other similar computing devices, which is used to broadcast the safety pre-warning information.

In addition, in the embodiment of the present disclosure, the actual environmental parameter of each of the multiple first detection areas in the first time period may be collected by robot patrolling or by an environmental parameter sensor arranged in each of the multiple first detection areas in advance.

It should be noted that, in the embodiment of the present disclosure, the schematic scenario diagram shown in FIG. 4 is only illustrative and not restrictive. A person skilled in the art may make various obvious changes and/or substitutions based on the example of FIG. 4, and the obtained technical solution still falls into the scope of the embodiment of the present disclosure.

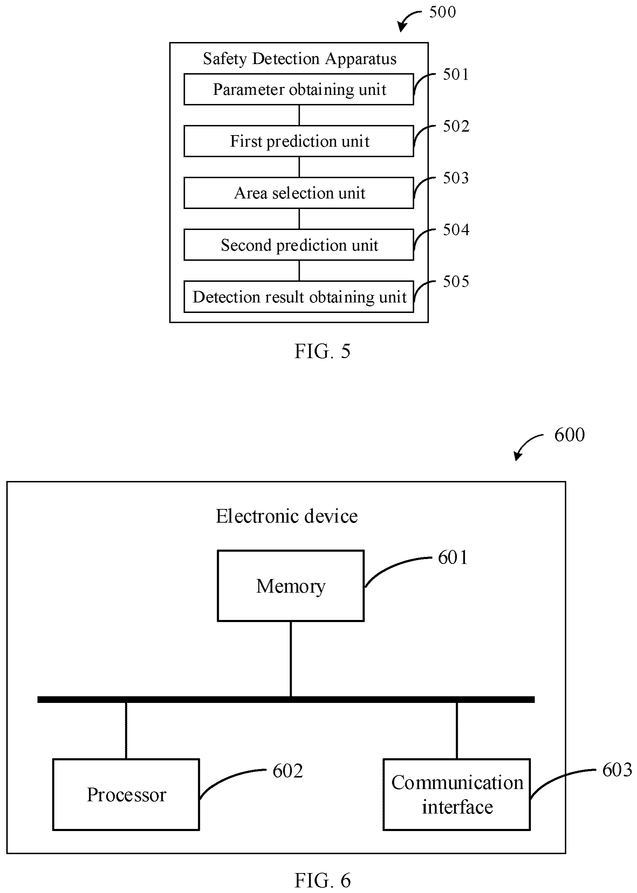

In order to better implement the safety detection method, the embodiment of the disclosure further provides an apparatus for safety detection, which is applied to an electronic device. The electronic device may represent a server, or various forms of terminal equipment, such as a computer (desktop or laptop), an internet of things device, or other similar computing devices. Hereinafter, the apparatus for safety detection 500 according to the embodiment of the disclosure will be described with reference to a schematic block diagram shown in FIG. 5.

The apparatus for safety detection 500 comprises:
a parameter obtaining unit 501, configured to obtain an actual environmental parameter of each of multiple first detection areas in a first time period, wherein the multiple first detection areas are located in a production workshop;
a first prediction unit 502, configured to obtain a first environmental parameter prediction result of each of the multiple first detection areas in a second time period based on the actual environmental parameter of each of the multiple first detection areas, wherein the second time period is a future time period of the first time period;
an area selection unit 503, configured to perform a detection area expansion operation for the production workshop based on an area position of each of the multiple first detection areas in the production workshop to obtain multiple second detection areas;
a second prediction unit 504, configured to obtain a second environmental parameter prediction result of each of the multiple second detection areas in the second time period based on the first environmental parameter prediction result of each of the multiple first detection areas; and
a detection result obtaining unit 505, configured to generate safety pre-warning information corresponding to a risk area responsive to determining that the risk area is present in the multiple second detection areas based on the second environmental parameter prediction result of each of the multiple second detection areas, and send the safety pre-warning information to a target terminal, wherein the target terminal is used to broadcast the safety pre-warning information.

In some optional implementations, the first prediction unit 502 is configured to:
construct a first input sequence based on the actual environmental parameter of a first area to be processed by using each of the multiple first detection areas as the first area to be processed;
construct a second input sequence based on the actual environmental parameter of the first area to be processed and a preset input sequence;
input the first input sequence and the second input sequence into a trained time sequence model to obtain an integral output sequence of the time sequence model; and
obtain the first environmental parameter prediction result of the first area to be processed in the second time period based on the integral output sequence.

In some optional implementations, the trained time sequence model includes an encoder and a decoder; and the first prediction unit 502 is configured to:
input the first input sequence into the encoder, and process the first input sequence by using a first self-attention module and a distillation module in the encoder to obtain a first input feature mapping result;
input the second input sequence into a second self-attention module in the encoder, and process the second input sequence by using the second self-attention module to obtain a second input feature mapping result; and
input the first input feature mapping result and the second input feature mapping result into a mutual attention module in the encoder, and process the first input feature mapping result and the second input feature mapping result by using the mutual attention module to obtain the integral output sequence of the time sequence model.

In some optional implementations, the area selection unit 503 is configured to:
by using each of the multiple first detection areas as the first area to be processed, determine at least one risk diffusion area related to the first area to be processed from the production workshop to obtain M risk diffusion areas related to the multiple first detection areas, wherein M ≥ 2 and M is an integer; and
obtain the multiple second detection areas based on the multiple first detection areas and the M risk diffusion areas.

In some optional implementations, the area selection unit 503 is configured to:
obtain at least one mergeable area group based on the M risk diffusion areas, wherein each of the at least one mergeable area group includes N mergeable areas in the M risk diffusion areas, where 2≤N≤M, and M and N are an integer;
perform area merging on each of the at least one mergeable area group, respectively, to obtain at least one risk diffusion merged area, wherein the at least one risk diffusion merged area corresponds one-to-one to the at least one mergeable area group; and
collectively use the multiple first detection areas and the at least one risk diffusion merged area as the multiple second detection areas.

In some optional implementations, the second prediction unit 504 is configured to:
by using each risk diffusion merged area in the multiple second detection areas as a second area to be processed, determine at least one reference area related to the second area to be processed from the multiple first detection areas; and
obtain the second environmental parameter prediction result of the second area to be processed in the second time period based on the first environmental parameter prediction result of the at least one reference area.

In some optional implementations, the apparatus for safety detection 500 further includes a risk area determination unit, configured to:
by using each of the multiple second detection areas as a third area to be processed, obtain at least one risk assessment parameter based on the second environmental parameter prediction result of the third area to be processed;
obtain a risk parameter threshold corresponding to each of the at least one risk assessment parameter; and
determine that the risk area is present in the multiple second detection areas responsive to determining the third area to be processed to be the risk area based on the at least one risk assessment parameter and the risk parameter threshold corresponding to each of the at least one risk assessment parameter.

In some optional implementations, the detection result obtaining unit 505 is configured to:
construct an initial workshop image based on an internal structure of the production workshop;
determine a target point corresponding to the risk area in the initial workshop image; and
perform special marking on the target point in the initial workshop image to obtain a target workshop image, and obtain the safety pre-warning information based on the target workshop image.

For the description of the specific functions and examples of each unit in the apparatus for safety detection 500 according to the embodiments of the present disclosure, reference can be made to the related description of the corresponding steps in the foregoing process embodiments, and details thereof will not be repeated herein.

In the technical scheme of the disclosure, the acquisition, storage and application of the user's personal information involved are all in compliance with the provisions of relevant laws and regulations, and do not violate public order and good customs.

FIG. 6 is a block diagram of an electronic device according to an embodiment of the present disclosure. As shown in FIG. 6, the electronic device includes: a memory 601 and a processor 602, the memory 601 storing therein a computer program operable on the processor 602. The number of the memory 601 and the processor 602 may be one or more. The memory 601 may store one or more computer programs that, when executed by the electronic device, cause the electronic device to perform the methods according to the above-described method embodiments. The electronic device may further include: the communication interface 603 is used for communicating with an external device to perform data interactive transmission.

If the memory 601, the processor 602, and the communication interface 603 are implemented independently, the memory 601, the processor 602, and the communication interface 603 may connect to and communicate with each other through a bus. The bus may be an Industry Standard Architecture (ISA) bus, a Peripheral Component Interconnect (PCI) bus, an Extended ISA (EISA) bus, or the like. The bus may be divided into an address bus, a data bus, a control bus, for example. For sake of illustration, the bus is represented by only one thick line in FIG. 6, but it does not mean only one bus or one type of bus is provided.

Optionally, in an implementation, if the memory 601, the processor 602, and the communication interface 603 are integrated on a chip, the memory 601, the processor 602, and the communication interface 603 may communicate with each other through an internal interface.

It should be understood that the processor may be a Central Processing Unit (CPU) or other general-purpose processor, a Digital Signal Processing (DSP), an Application Specific Integrated Circuit (ASIC), a Field Programmable Gate Array (FPGA) or other programmable logic device, discrete gate or transistor logic device or discrete hardware components, for example. The general-purpose processor may be a microprocessor or any conventional processor. It is noted that the processor may be a processor supporting Advanced RISC Machine (ARM) architecture.

Further, optionally, the memory may include a read-only memory and a random-access memory, and may further include a nonvolatile random-access memory. The memory may be a volatile memory or a nonvolatile memory, or may include both the volatile and the nonvolatile memory. The non-volatile memory may include a Read-Only Memory (ROM), a Programmable ROM (PROM), an Erasable PROM (EPROM), an Electrically EPROM (EEPROM), or a flash Memory. The volatile memory may include a Random-Access Memory (RAM), which acts as an external cache memory. By way of example and not limitation, many forms of RAM are available, such as Static RAM (SRAM), Dynamic Random-Access Memory (DRAM), Synchronous DRAM (SDRAM), Double Data Rate SDRAM (DDR SDRAM), Enhanced SDRAM (ESDRAM), Synchlink DRAM (SLDRAM), and Direct RAMBUS RAM (DR RAM).

The above embodiments may be implemented in whole or in part by software, hardware, firmware, or any combination thereof. When implemented in software, they may be implemented in whole or in part in the form of a computer program product. The computer program product includes one or more computer instruction. The computer instruction, when loaded and executed on a computer, can all or partially generate the flows or functions described in accordance with the embodiments of the disclosure. The computer may be a general-purpose computer, a special purpose computer, a network of computers, or other programmable devices. The computer instruction can be stored in a computer-readable storage medium or transmitted from one computer-readable storage medium to another computer-readable storage medium. For example, the computer instruction can be transmitted from one website, computer, server, or data center to another website, computer, server, or data center via wire (e.g., coaxial cable, fiber optic or Digital Subscriber Line (DSL)) or wireless (e.g., infrared, Bluetooth of microwave). The computer-readable storage medium can be any available medium that can be accessed by a computer or a data storage device, such as a server and a data center, that includes one or more available medium integration. The available medium may be a magnetic medium (e.g., floppy Disk, hard Disk, magnetic tape), an optical medium (e.g., Digital Versatile Disk (DVD)), or a semiconductor medium (e.g., Solid State Disk (SSD)), for example. It should be noted that the computer-readable storage medium referred to in the disclosure can be non-volatile storage medium, i.e., non-transitory storage medium.

It will be understood by those skilled in the art that all or part of the steps for performing the above embodiments may be implemented by hardware, or may be implemented by a program instructing relevant hardware, where the program may be stored in a computer-readable storage medium, and the storage medium may be a read-only memory, a magnetic disk or an optical disk.

In the description of the embodiments of the present disclosure, the description with reference to the terms such as "one embodiment", "some embodiments", "an example", "a specific example" or "some examples" means that a particular feature, structure, material, or characteristic described in connection with the embodiment or example is included in at least one embodiment or example of the present disclosure. Furthermore, the particular features, structures, materials, or characteristics described may be combined in any suitable manner in any one or more embodiments or examples. Moreover, various embodiments or examples and features in various embodiments or examples described in this specification can be combined and grouped by one skilled in the art if there is no mutual conflict.

In the description of the embodiments of the present disclosure, the sign "/" indicates a meaning of "or", for example, A/B indicates a meaning of A or B, unless otherwise specified. The term "and/or" herein is merely an association relationship describing associated objects, and means that there may be three relationships, for example, A and/or B may mean: A alone, both A and B, and B alone.

In the description of the embodiments of the present disclosure, the terms "first", "second" or "third" are used for descriptive purposes only and should not be construed as indicating or implying relative importance or implicitly indicating the number of technical features as indicated. Thus, a feature defined as "first", "second" or "third" may explicitly or implicitly include one or more features. In the description of the embodiments of the present disclosure, "multiple" means two or more unless otherwise specified.

The above description is intended only to illustrate embodiments of the present disclosure, and should not be taken as limiting thereof, and any modifications, equivalents and improvements made within the principle of the present disclosure will fall within the scope of the present disclosure.

## Claims

1. A method for safety detection, comprising:
obtaining (S101) an actual environmental parameter of each of a plurality of first detection areas in a first time period, wherein the plurality of first detection areas are located in a production workshop;
obtaining (S102) a first environmental parameter prediction result of each of the plurality of first detection areas in a second time period based on the actual environmental parameter of each of the plurality of first detection areas, wherein the second time period is a future time period of the first time period;
performing (S103) a detection area expansion operation for the production workshop based on an area position of each of the plurality of first detection areas in the production workshop to obtain a plurality of second detection areas;
obtaining (S104) a second environmental parameter prediction result of each of the plurality of second detection areas in the second time period based on the first environmental parameter prediction result of each of the plurality of first detection areas; and
generating (S105) safety pre-warning information corresponding to a risk area responsive to determining that the risk area is present in the plurality of second detection areas based on the second environmental parameter prediction result of each of the plurality of second detection areas, and sending the safety pre-warning information to a target terminal, where the target terminal is used to broadcast the safety pre-warning information.

2. The method of claim 1, wherein the obtaining the first environmental parameter prediction result of each of the plurality of first detection areas in the second time period based on the actual environmental parameter of each of the plurality of first detection areas, comprises:
constructing a first input sequence based on the actual environmental parameter of a first area to be processed by using each of the plurality of first detection areas as the first area to be processed;
constructing a second input sequence based on the actual environmental parameter of the first area to be processed and a preset input sequence;
inputting the first input sequence and the second input sequence into a trained time sequence model to obtain an integral output sequence of the time sequence model; and
obtaining the first environmental parameter prediction result of the first area to be processed in the second time period based on the integral output sequence.

3. **The method** of claim 2, wherein the trained time sequence model comprises an encoder and a decoder; the inputting the first input sequence and the second input sequence into the trained time sequence model to obtain the integral output sequence of the time sequence model, comprises:
inputting the first input sequence into the encoder, and processing the first input sequence by using a first self-attention module and a distillation module in the encoder to obtain a first input feature mapping result;
inputting the second input sequence into a second self-attention module in the encoder, and processing the second input sequence by using the second self-attention module to obtain a second input feature mapping result; and
inputting the first input feature mapping result and the second input feature mapping result into a mutual attention module in the encoder, and processing the first input feature mapping result and the second input feature mapping result by using the mutual attention module to obtain the integral output sequence of the time sequence model.

4. The method of any one of claims 1 to 3, wherein the performing the detection area expansion operation for the production workshop based on the area position of each of the plurality of first detection areas in the production workshop to obtain the plurality of second detection areas, comprises:
by using each of the plurality of first detection areas as the first area to be processed, determining at least one risk diffusion area related to the first area to be processed from the production workshop to obtain M risk diffusion areas related to the plurality of first detection areas, wherein M ≥ 2 and M is an integer; and
obtaining the plurality of second detection areas based on the plurality of first detection areas and the M risk diffusion areas;
wherein the obtaining the plurality of second detection areas based on the plurality of first detection areas and the M risk diffusion areas, comprises:
obtaining at least one mergeable area group based on the M risk diffusion areas, wherein each of the at least one mergeable area group includes N mergeable areas in the M risk diffusion areas, where 2≤N≤M, and M and N are an integer;
performing area merging on each of the at least one mergeable area group, respectively, to obtain at least one risk diffusion merged area, wherein the at least one risk diffusion merged area corresponds one-to-one to the at least one mergeable area group; and
collectively using the plurality of first detection areas and the at least one risk diffusion merged area as the plurality of second detection areas.

5. The method of claim 4, wherein the obtaining the second environmental parameter prediction result of each of the plurality of second detection areas in the second time period based on the first environmental parameter prediction result of each of the plurality of first detection areas, comprises:
by using each risk diffusion merged area in the plurality of second detection areas as a second area to be processed, determining at least one reference area related to the second area to be processed from the plurality of first detection areas; and
obtaining the second environmental parameter prediction result of the second area to be processed in the second time period based on the first environmental parameter prediction result of the at least one reference area.

6. The method of claim 1, further comprising:
by using each of the plurality of second detection areas as a third area to be processed, obtaining at least one risk assessment parameter based on the second environmental parameter prediction result of the third area to be processed;
obtaining a risk parameter threshold corresponding to each of the at least one risk assessment parameter; and
determining that the risk area is present in the plurality of second detection areas responsive to determining the third area to be processed to be the risk area based on the at least one risk assessment parameter and the risk parameter threshold corresponding to each of the at least one risk assessment parameter.

7. The method of claim 1, wherein the generating the safety pre-warning information corresponding to the risk area, comprises:
constructing an initial workshop image based on an internal structure of the production workshop;
determining a target point corresponding to the risk area in the initial workshop image; and
performing special marking on the target point in the initial workshop image to obtain a target workshop image, and obtaining the safety pre-warning information based on the target workshop image.

8. An apparatus for safety detection (500), comprising:
a parameter obtaining unit (501), configured to obtain an actual environmental parameter of each of a plurality of first detection areas in a first time period, wherein the plurality of first detection areas are located in a production workshop;
a first prediction unit (502), configured to obtain a first environmental parameter prediction result of each of the plurality of first detection areas in a second time period based on the actual environmental parameter of each of the plurality of first detection areas, wherein the second time period is a future time period of the first time period;
an area selection unit (503), configured to perform a detection area expansion operation for the production workshop based on an area position of each of the plurality of first detection areas in the production workshop to obtain a plurality of second detection areas;
a second prediction unit (504), configured to obtain a second environmental parameter prediction result of each of the plurality of second detection areas in the second time period based on the first environmental parameter prediction result of each of the plurality of first detection areas; and
a detection result obtaining unit (505), configured to generate safety pre-warning information corresponding to a risk area responsive to determining that the risk area is present in the plurality of second detection areas based on the second environmental parameter prediction result of each of the plurality of second detection areas, and send the safety pre-warning information to a target terminal, wherein the target terminal is used to broadcast the safety pre-warning information.

9. The apparatus of claim 8, wherein the first prediction unit (502) is configured to:
construct a first input sequence based on the actual environmental parameter of a first area to be processed by using each of the plurality of first detection areas as the first area to be processed;
construct a second input sequence based on the actual environmental parameter of the first area to be processed and a preset input sequence;
input the first input sequence and the second input sequence into a trained time sequence model to obtain an integral output sequence of the time sequence model; and
obtain the first environmental parameter prediction result of the first area to be processed in the second time period based on the integral output sequence.

10. The apparatus of claim 9, wherein the trained time sequence model comprises an encoder and a decoder; the first prediction unit is configured to:
input the first input sequence into the encoder, and process the first input sequence by using a first self-attention module and a distillation module in the encoder to obtain a first input feature mapping result;
input the second input sequence into a second self-attention module in the encoder, and process the second input sequence by using the second self-attention module to obtain a second input feature mapping result; and
input the first input feature mapping result and the second input feature mapping result into a mutual attention module in the encoder, and process the first input feature mapping result and the second input feature mapping result by using the mutual attention module to obtain the integral output sequence of the time sequence model.

11. The apparatus of any one of claims 8 to 10, wherein the area selection unit (503) is configured to:
by using each of the plurality of first detection areas as the first area to be processed, determine at least one risk diffusion area related to the first area to be processed from the production workshop to obtain M risk diffusion areas related to the plurality of first detection areas, wherein M ≥ 2 and M is an integer; and
obtain the plurality of second detection areas based on the plurality of first detection areas and the M risk diffusion areas;
wherein the area selection unit is configured to:
obtain at least one mergeable area group based on the M risk diffusion areas, wherein each of the at least one mergeable area group includes N mergeable areas in the M risk diffusion areas, where 2≤N≤M, and M and N are an integer;
perform area merging on each of the at least one mergeable area group, respectively, to obtain at least one risk diffusion merged area, wherein the at least one risk diffusion merged area corresponds one-to-one to the at least one mergeable area group; and
collectively use the plurality of first detection areas and the at least one risk diffusion merged area as the plurality of second detection areas.

12. The apparatus of claim 11, wherein the second prediction unit (504) is configured to:
by using each risk diffusion merged area in the plurality of second detection areas as a second area to be processed, determine at least one reference area related to the second area to be processed from the plurality of first detection areas; and
obtain the second environmental parameter prediction result of the second area to be processed in the second time period based on the first environmental parameter prediction result of the at least one reference area.

13. The apparatus of claim 8, further comprising a risk area determination unit configured to:
by using each of the plurality of second detection areas as a third area to be processed, obtain at least one risk assessment parameter based on the second environmental parameter prediction result of the third area to be processed;
obtain a risk parameter threshold corresponding to each of the at least one risk assessment parameter; and
determine that the risk area is present in the plurality of second detection areas responsive to determining the third area to be processed to be the risk area based on the at least one risk assessment parameter and the risk parameter threshold corresponding to each of the at least one risk assessment parameter.

14. The apparatus of claim 8, wherein the detection result obtaining unit is configured to:
construct an initial workshop image based on an internal structure of the production workshop;
determine a target point corresponding to the risk area in the initial workshop image; and
perform special marking on the target point in the initial workshop image to obtain a target workshop image, and obtain the safety pre-warning information based on the target workshop image.

15. A non-transitory computer-readable storage medium storing a computer instruction thereon, wherein the computer instruction is used to cause a computer to execute the method of any one of claims 1 to 7.
